(19) Europäisches Patentamt / European Patent Office / Office européen des brevets

(11) **EP 3 552 123 B1**

(12) **FASCICULE DE BREVET EUROPEEN**

(45) Date de publication et mention
de la délivrance du brevet:
**25.09.2024 Bulletin 2024/39**

(21) Numéro de dépôt: **17817001.5**

(22) Date de dépôt: **07.12.2017**

(51) Classification Internationale des Brevets (IPC):
**G06F 30/17** (2020.01)   **F01D 5/02** (2006.01)
**F04D 29/66** (2006.01)   **G06F 111/06** (2020.01)
**G06F 119/18** (2020.01)

(52) Classification Coopérative des Brevets (CPC):
**G06F 30/17; F01D 5/027; F04D 29/662;**
G06F 2111/06; G06F 2119/18; Y02P 90/02

(86) Numéro de dépôt international:
**PCT/FR2017/053450**

(87) Numéro de publication internationale:
**WO 2018/104678 (14.06.2018 Gazette 2018/24)**

(54) **PROCÉDÉ DE FABRICATION D'UNE ROUE AUBAGÉE POUR TURBOMACHINE**

HERSTELLUNGSVERFAHREN EINES SCHAUFELSRADS EINES TURBOTRIEBWERKS

METHOD FOR MANUFACTURING A TURBOMACHINE BLADED WHEEL

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR

(30) Priorité: **07.12.2016 FR 1662048**

(43) Date de publication de la demande:
**16.10.2019 Bulletin 2019/42**

(73) Titulaire: **Safran Aircraft Engines**
**75015 Paris (FR)**

(72) Inventeurs:
• **ANFRIANI, Alexandre**
**77550 Moissy-Cramayel (FR)**
• **LAFITTE, Anthony, Bernard, Germain**
**77550 Moissy-Cramayel (FR)**
• **RICORDEAU, Julien, Alexis, Louis**
**77550 Moissy-Cramayel (FR)**
• **ROUX, Jean-Michel**
**77550 Moissy-Cramayel (FR)**

(74) Mandataire: **Regimbeau**
**20, rue de Chazelles**
**75847 Paris Cedex 17 (FR)**

(56) Documents cités:
**FR-A1- 3 037 168     FR-A1- 3 037 168**

• **ANDREW MASON ET AL: "Solution methods for the balancing of jet turbines", COMPUTERS AND OPERATIONS RESEARCH, vol. 24, no. 2, 1 February 1997 (1997-02-01), GB, pages 153 - 167, XP055409625, ISSN: 0305-0548, DOI: 10.1016/S0305-0548(96)00047-0**
• **TAILLARD E ED - TUMEO ANTONINO ET AL: "ROBUST TABOO SEARCH FOR THE QUADRATIC ASSIGNMENT PROBLEM", PARALLEL COMPUTING, ELSEVIER, AMSTERDAM, NL, vol. 17, no. 4 / 05, 1 July 1991 (1991-07-01), pages 443 - 455, XP000262054, ISSN: 0167-8191, DOI: 10.1016/S0167-8191(05)80147-4**
• **E TAILLARD: "Metaheuristics for hard combinatorial optimization", 1 November 2004 (2004-11-01), XP055417000, Retrieved from the Internet <URL:http://mistic.heig-vd.ch/taillard/presentations.dir/tr_wien2.pdf> [retrieved on 20171018]**
• **ÉRIC D TAILLARD ET AL: "Popmusic - Partial Optimization Metaheuristic under Special Intensification Conditions", 1 January 2002, ESSAYS AND SURVEYS IN METAHEURIS; [VOLUME 15 OF THE SERIES OPERATIONS RESEARCH/COMPUTER SCIENCE INTERFACES SERIES ISSN 1387-666X], NEW YORK : SPRINGER, 2002, US, PAGE(S) 613 - 629, ISBN: 978-1-4613-5588-5, XP008179677**

**EP 3 552 123 B1**

**(Cont. page suivante)**

- ANONYMOUS: "Multi-objective optimization - Wikipedia", 18 March 2016 (2016-03-18), XP055697412, Retrieved from the Internet <URL:https://en.wikipedia.org/w/index.php?title=Multi-objective_optimization&oldid=710626005> [retrieved on 20200520]
- ANDREW MASON ET AL: "Solution methods for the balancing of jet turbines", COMPUTERS AND OPERATIONS RESEARCH, vol. 24, no. 2, 1 February 1997 (1997-02-01), GB, pages 153 - 167, XP055409625, ISSN: 0305-0548, DOI: 10.1016/S0305-0548(96)00047-0
- TAILLARD E ED - TUMEO ANTONINO ET AL: "ROBUST TABOO SEARCH FOR THE QUADRATIC ASSIGNMENT PROBLEM", PARALLEL COMPUTING, ELSEVIER, AMSTERDAM, NL, vol. 17, no. 4 / 05, 1 July 1991 (1991-07-01), pages 443 - 455, XP000262054, ISSN: 0167-8191, DOI: 10.1016/S0167-8191(05)80147-4
- E TAILLARD: "Metaheuristics for hard combinatorial optimization", 1 November 2004 (2004-11-01), XP055417000, Retrieved from the Internet <URL:http://mistic.heig-vd.ch/taillard/presentations.dir/tr_wien2.pdf> [retrieved on 20171018]
- ÉRIC D TAILLARD ET AL: "Popmusic - Partial Optimization Metaheuristic under Special Intensification Conditions", 1 January 2002, ESSAYS AND SURVEYS IN METAHEURIS; [VOLUME 15 OF THE SERIES OPERATIONS RESEARCH/COMPUTER SCIENCE INTERFACES SERIES ISSN 1387-666X], NEW YORK : SPRINGER, 2002, US, PAGE(S) 613 - 629, ISBN: 978-1-4613-5588-5, XP008179677

**Description**

DOMAINE GENERAL

L'invention concerne un procédé de fabrication d'une roue aubagée pour turbomachine à partir d'aubes et d'un disque, le procédé comprenant un procédé de simulation de répartition d'aubes sur un disque de turbomachine.

ETAT DE L'ART

Des aubes destinées à être montées autour d'un disque de turbomachine sont sujettes à de faibles dispersions au cours de leur fabrication.

Ces dispersions peuvent être mesurables à froid sur chaque aube fabriquée, c'est-à-dire avant leur montage sur le disque et la mise en rotation de la roue aubagée obtenue à l'issue de ce montage. Ces dispersions peuvent également être mesurées à chaud sur les différentes aubes, c'est-à-dire au cours de la rotation de la roue aubagée.

De telles dispersions sont susceptibles de rendre la roue aubagée déséquilibrée. Les conséquences d'un tel déséquilibre sont multiples: vibrations de l'ensemble du moteur, et/ou génération d'un bruit acoustique important pendant la mise en rotation de la roue aubagée.

Pour répartir des aubes de façon équilibrée autour d'un disque de turbomachine, il a été proposé de mettre en oeuvre un algorithme configuré pour rechercher, dans un ensemble de répartitions d'aubes possibles, une répartition optimisant une fonction de coût prédéterminée.

Des algorithmes de ce type ont été proposé dans le document « Solution methods for the balancing of jet turbines », par Andrew Mason et al, et dans le document FR3037168.

Pour n aubes à monter autour d'un disque, une telle recherche est effectuée dans un ensemble de (n-1)!/2 répartitions d'aubes, en considérant la roue identique par rotation et symétrie. Une telle recherche requiert donc un grand nombre de calculs si le nombre n est élevé. A titre d'exemple, pour n=18, qui est un nombre classique d'aubes dans une roue aubagée pour turbomachine, l'ensemble des répartitions sélectionnables comprend plus de $2.10^{14}$ répartitions.

Afin de limiter une telle charge de calcul, le document « POPMUSIC - Partial Optimisation Metaheuristic under Spécial Intensification Conditions », par Eric Taillard et publié le 1er janvier 2002, propose de rechercher une répartition d'aubes optimisant une fonction de coût prédéterminée au moyen d'un algorithme de type Tabou.

L'utilisation d'un tel algorithme de type Tabou permet d'explorer l'espace défini par l'ensemble des répartitions possibles de façon relativement rapide. Le document « Robust Taboo Search for the quadratic assignement problem » décrit une utilisation d'un tel algorithme.

L'algorithme proposé dans ce document passe d'une répartition à l'autre par une permutation de deux aubes. Toutefois, cette manière d'explorer l'ensemble des répartitions possibles peut requérir l'examen d'un nombre substantiel de répartitions lorsque la fonction de coût utilisée dépend de plusieurs paramètres d'équilibrage d'aube. En d'autres termes, cet algorithme converge vers une solution optimale vérifiant la fonction coût de façon relativement lente.

PRESENTATION DE L'INVENTION

Un but de l'invention est de répartir des aubes autour d'un disque de turbomachine de façon équilibrée, moyennant une charge de calcul limitée.

Afin d'atteindre ce but l'invention propose un procédé de fabrication d'une roue aubagée conforme à la revendication 1.

Au cours de l'étape de génération de répartitions voisines, des critères de ressemblance différents sont utilisés pour générer ces voisins. Ces critères de ressemblance différents définissent des voisinages différents de la répartition de référence.

Le fait d'utiliser différents critères de ressemblance (et donc de définir différents voisinages pour une répartition de référence) permet de définir plusieurs stratégies d'exploration de l'espace des répartitions d'aube.

Une répartition voisine peut ainsi être relativement équilibrée du point de vue d'un premier type de paramètre d'équilibrage, mais relativement déséquilibrée d'un point de vue d'un autre type de paramètre d'équilibrage. Ainsi, les voisins définis par les différents ensembles de critères de ressemblance ne permettent pas de se rapprocher dans les mêmes proportions d'une répartition solution hypothétique vérifiant la fonction de coût. L'étape de sélection permet de réaliser un arbitrage entre les différentes stratégies offertes par les différents ensembles de critères de ressemblance utilisés, et donc de converger plus rapidement vers une solution optimale.

Par ailleurs, le seuillage d'au moins un des balourds par application de la fonction de coût a pour effet de faire en sorte que, lorsque l'un des critères est rempli, la recherche effectuée se concentre sur les autres critères.

L'invention peut également être complétée par les caractéristiques mentionnées dans les revendications dépendantes.

L'algorithme de type Tabou permet d'explorer l'espace défini par l'ensemble des répartitions possibles de façon rapide. En effet, au cours de chaque itération de la recherche et de la sélection, certaines répartitions ayant déjà été testées précédemment ne sont pas traitées à nouveau.

Comme on le verra dans la suite, un algorithme de type Tabou utilisé au cours de la recherche fait en sorte de diminuer le nombre de répartitions d'aube testées au cours de la recherche.

DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

La figure 1 représente une roue aubagée pour turbomachine.
Les figures 2a, 2b et 2c détaillent certains paramètres mesurables sur une aube de turbomachine.
La figure 3 représente schématiquement un dispositif de répartition d'aubes selon un mode de réalisation de l'invention.
La figure 4 est un logigramme d'étapes d'un procédé de répartition d'aubes selon un mode de réalisation de l'invention.
La figure 5 est un logigramme détaillant une étape représentée en figure 4.
La figure 6 représente de façon schématique une répartition de roue aubagée de référence et des répartitions voisines de cette répartition de références, générées au cours d'un procédé de répartition d'aube selon un mode de réalisation de l'invention.
La figure 7 représente une fonction de coût selon un mode de réalisation de l'invention.

Sur l'ensemble des figures, les éléments similaires portent des références identiques.

DESCRIPTION DETAILLEE DE L'INVENTION

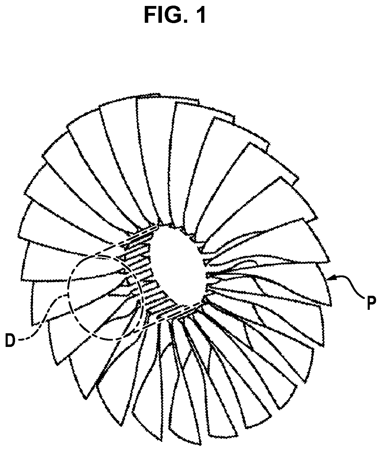

En référence à la **figure 1**, une roue aubagée pour turbomachine comprend un disque D et une pluralité d'aubes P réparties sur le disque autour de son axe.

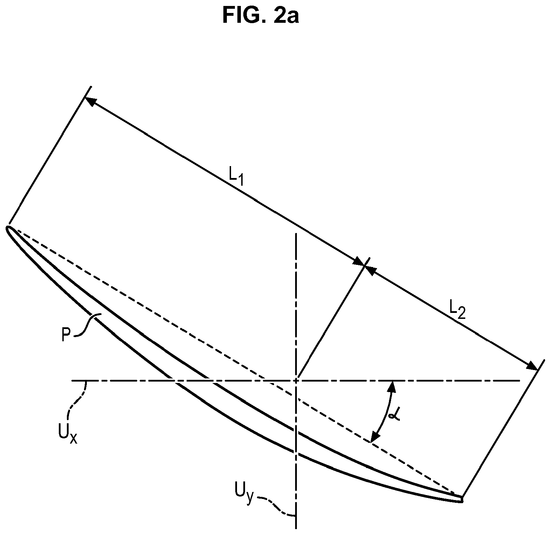

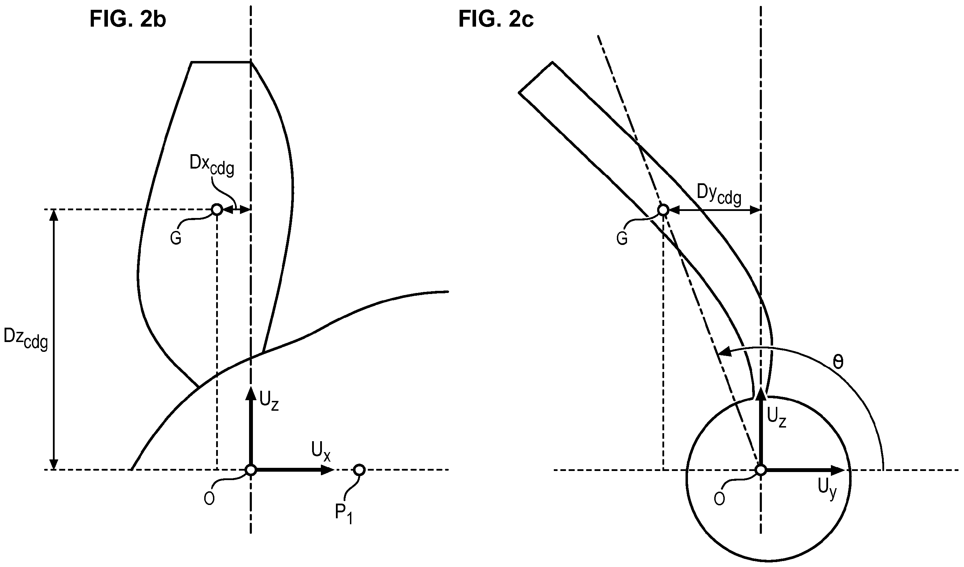

On a illustré sur les **figures 2a**, **2b**, **2c** une aube P destinée à être assemblée sur le disque D.

L'aube P présente notamment les caractéristiques intrinsèques suivantes : un moment axial A, un moment tangentiel T, un moment radial R. L'aube P présente également un angle de calage.

En référence à la figure 2a, l'angle de calage $\alpha$ peut être décrit comme l'angle entre la corde de l'aube P et un axe de rotation $U_X$ du disque, également appelé « axe moteur » dans ce qui suit.

En référence aux figures 2b et 2c, l'aube P présente un centre de gravité G. Un moment statique est le produit de la masse de l'aube P et d'une des coordonnées $(Dx_{cdg}, Dy_{cdg}, Dz_{cdg})$ du centre de gravité G de l'aube P pris dans un repère direct orthonormé $(O, U_x, U_y, U_z)$ avec $U_x$ étant l'axe moteur, et O étant le centre du repère sur l'axe moteur.

Pour le moment radial R, la coordonnée multipliée à la masse de l'aube est celle du centre de gravité de l'aube prise sur l'axe $U_z$.

Pour le moment axial A, la coordonnée multipliée à la masse de l'aube est celle du centre de gravité de l'aube prise sur l'axe $U_x$.

Pour le moment tangentiel T, la coordonnée multipliée à la masse de l'aube est celle du centre de gravité de l'aube prise sur l'axe $U_y$.

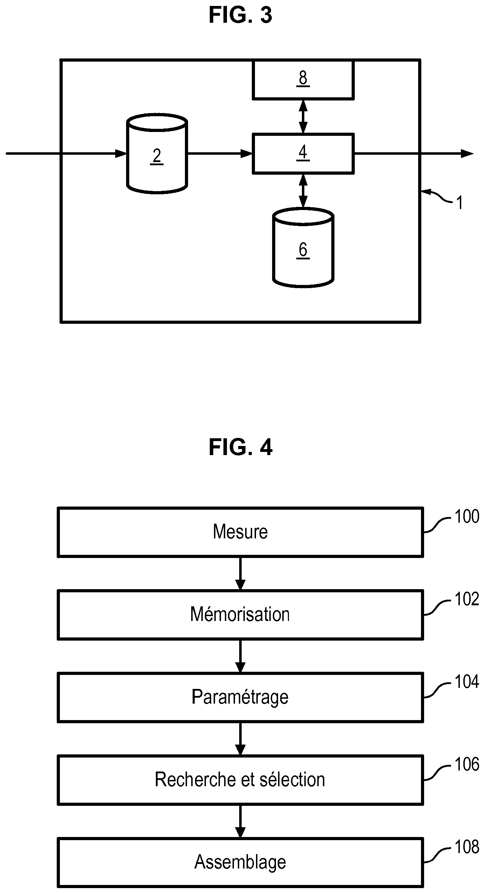

En référence la **figure 3**, un dispositif 1 pour répartir une pluralité d'aube P sur le disque D pour former une roue aubagée de turbomachine, comprend une mémoire de stockage 2, une unité de calcul 4, une mémoire tampon 6 et une interface homme-machine 8.

La mémoire de stockage 2 est configurée pour stocker une base de données contenant des données représentatives d'aubes (par exemple les moments et calage à froid, la masse de l'aube, l'angle de calage de l'aube, la hauteur de l'aube, de manière non limitative) et de positions de ces aubes sur un disque D.

L'unité de calcul 4 est configurée pour mettre en oeuvre un algorithme de recherche de type Tabou, qui sera détaillé ci-après, à partir des données stockées dans la mémoire 2. L'unité de calcul 4 a accès en lecture et en écriture à la mémoire de stockage 2.

La mémoire tampon 6 est également accessible en lecture et en écriture par l'unité de calcul 4. Cette mémoire tampon 6 est configurée pour stocker des données temporaires calculées par l'unité de calcul 4. En variante, les mémoires 2 et 6 forment une seule et même mémoire.

L'interface homme-machine 8 comprend par exemple un écran d'affichage et des moyens de saisie telle qu'un clavier manipulable par un opérateur. L'interface homme-machine 8 offre la possibilité à cet opérateur de modifier des paramètres d'exécution de l'algorithme mis en oeuvre par l'unité de calcul 4.

On va maintenant décrire en relation avec la figure 4 les étapes d'un procédé de simulation de répartition sollicitant le dispositif 1.

On considère que n aubes P individuelles ont précédemment été fabriquées, ainsi que le disque D, comprenant n emplacements libres pour aube, répartis autour de son axe.

Dans une étape préliminaire 100, une ou plusieurs mesures de paramètres d'équilibrage sont effectuées sur chacune des n aubes. Dans la suite, on considère qu'un paramètre d'équilibrage est une grandeur physique caractérisant une aube individuelle.

Il peut être envisagé comme mesure de paramètres d'équilibrage au moins l'un des types de mesures suivants : mesure d'angle de calage, mesure de moment axial, mesure de moment tangentiel, mesure de moment radial, au moyen de méthodes de mesures connues de l'homme du métier (par exemple à l'aide de balances).

Les valeurs de mesure sont mémorisées par la mémoire 2 dans une base de données, au cours d'une étape de mémorisation 102.

La base de données est par exemple organisée sous la forme d'une table à plusieurs entrées, chaque entrée se rapportant à une des n aubes considérées. Chaque entrée comprend une ou plusieurs mesures réalisées sur une même aube, l'ensemble formé par ces mesures étant dans la suite appelé « configuration d'aube ». En complément de ces mesures, une entrée peut comprendre un identifiant d'aubes unique et/ou un numéro de série.

| SN | Angle (°) | Radial (inch g) | Axial (inch g) | Tangentiel (inch g) | Posi_Instrum | Fixe ? |
|---|---|---|---|---|---|---|
| KLJLKAER | -0,22 | 12345 | - 2000 | 507 | 1 | Oui |
| FHFGHFGHDFH | -0,31 | 12500 | - 2500 | 420 | 5 | Non |
| FHGFH | - 0,250 | 13000 | - 1500 | 560 | 12 | Non |
| HGHGGH | -0,02 | 12000 | - 1800 | 670 | 6 | Non |
| GHFG | - 0,101 | 12700 | - 1702 | 450 | 2 | Oui |
| FHGF | - 0,200 | 11800 | - 1504 | 590 | 10 | Non |
| FHGF | - 0,500 | 13500 | - 1203 | 360 | 17 | Non |
| ... | ... | ... | ... | ... | ... | ... |

Dans la table ci-dessus, les lignes représentent des entrées respectives de la base de données. Les colonnes du tableau contiennent, de gauche à droite : un numéro de série SN unique permettant d'identifier une aube, une valeur d'angle de calage (par rapport à un angle de référence) mesuré sur l'aube, une valeur de moment radial mesurée sur l'aube, une valeur de moment axial mesurée sur l'aube, une valeur de moment tangentiel mesurée sur l'aube, et une information indiquant si l'aube doit être positionnée à une position imposée ou fixe, ou que cette aube peut au contraire être librement placée à n'importe laquelle des n positions prédéterminées.

Sont également initiées au cours de l'étape 100 dans la base de données, n informations de position, chaque information définissant la position autour de l'axe du disque D d'un emplacement pour aube respectif. Dans la suite, ces informations de positions seront simplement dénommées « positions d'aube », ou plus simplement positions.

Une position d'aube peut être exprimée comme un angle, ou bien comme un indice i variant de 1 à n dans un repère lié à la roue aubagée. Dans la suite, on considérera que les positions sont des indices à partir desquels des angles correspondants dans le repère de la roue aubagée, peuvent être déterminés.

A ce stade du procédé, les n positions d'aube mémorisées et les n configurations d'aube ne sont pas encore associées.

Dans une étape 106 de recherche et de sélection, l'unité de calcul 4 produit une pluralité de répartitions des aubes sur la roue aubagée, et recherche et sélectionne une de ces répartitions de roue aubagée qui optimise une fonction de coût prédéterminée. Cette fonction de coût est représentative d'un critère d'équilibrage et dépend des paramètres d'équilibrage considérés.

On définit une répartition de roue aubagée comme un n-uplet d'associations, chaque association associant une des n configurations d'aube et une des n position d'aube. (n-1)!/2 répartitions d'aubes différentes peuvent donc être théoriquement générées au cours de l'étape 106. Comme on le verra dans la suite, un algorithme de type Tabou utilisé au cours de la recherche fait en sorte de diminuer le nombre de répartitions d'aube testées au cours de la recherche.

Dans une étape d'assemblage 108, les n aubes individuelles sont assemblées sur le disque D, en ses n emplacements, d'après la répartition sélectionnée par le dispositif 1 au cours de l'étape précédente 106 de recherche et de sélection.

*Recherche et sélection au moyen d'un algorithme de type Tabou*

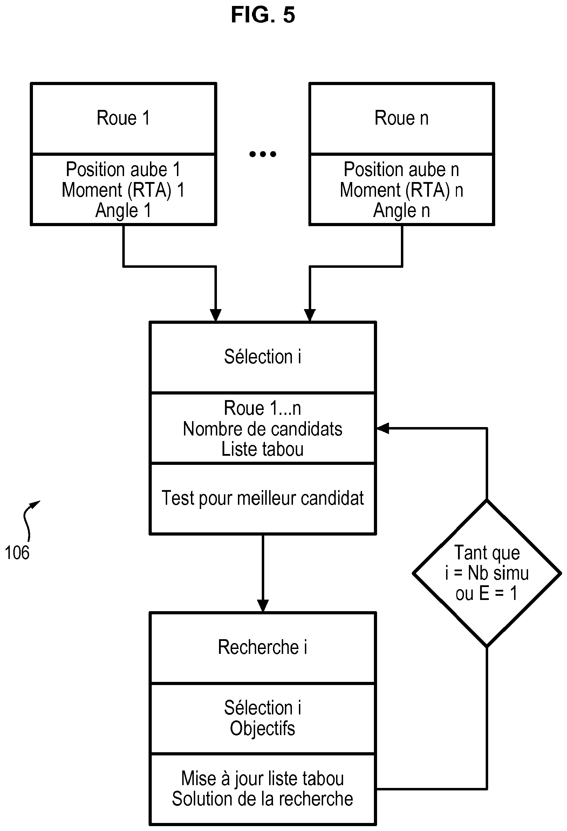

On va maintenant détailler en relation avec la **figure 5** l'étape de recherche et de sélection 106 de la répartition d'aube à utiliser pour l'assemblage.

A titre préliminaire, deux listes sont allouées dans la mémoire tampon 6 : une liste de candidats, et une liste dite « tabou ».

La recherche est mise en oeuvre au moyen d'un algorithme de type Tabou, comprenant des itérations successives.

Une itération courante comprend les sous-étapes suivantes.

L'unité de calcul détermine une répartition de roue aubagée de référence.

Dans le cas particulier de la première itération, la répartition de référence peut par exemple être générée aléatoirement et mémorisée dans la mémoire tampon 6 et/ou dans la base de données de la mémoire 2. En variante, la première répartition de référence est définie par l'opérateur au cours d'une étape de paramétrage 104, via l'interface homme/machine 8.

Dans toute itération excepté la première, la répartition de référence a été générée au cours d'une itération précédente.

L'unité de calcul 4 génère à partir de la répartition de référence plusieurs répartitions voisines de la répartition de référence, d'après plusieurs critères de ressemblance prédéterminés, chaque répartition voisine se rapportant à l'un des critères de ressemblance prédéterminés.

En d'autres termes, si q critères de ressemblance différents sont utilisés au cours de cette étape de génération, au moins q voisins définis selon des critères de ressemblance différents sont générés.

Chaque critère de ressemblance prédéterminé correspond à une fonction mathématique bijective de permutation (composition de transpositions) entre deux répartitions. En d'autres termes, une répartition qui respecte un critère de ressemblance prédéterminé est une répartition voisine au sens de ce critère.

Pour chacun des critères de ressemblance utilisés, il existe un nombre total de répartitions voisines satisfaisant ce critère de ressemblance susceptibles d'être générées. Toutefois, pour limiter la charge de calcul du procédé, seule une partie des répartitions voisines possibles au sens d'un critère de ressemblance donné est générée, leur sélection étant aléatoire.

Les répartitions voisines sont mémorisées dans la liste de candidats, par la mémoire tampon 6, après vidage de cette liste de candidats.

L'unité de calcul 4 calcule le coût de chaque configuration voisine, par application de la fonction de coût aux mesures de paramètres d'équilibrages contenus dans la configuration voisine.

Plus précisément, l'unité de calcul 4 calcule, pour chaque répartition voisine, au moins un balourd se rapportant à un ou plusieurs types de mesure de paramètre d'équilibrage ; la fonction de coût est appliquée au balourd de chaque répartition voisine.

Un balourd correspond à l'excentrement du centre de gravité de l'ensemble de la roue. Ce centre de gravité est calculé par sommation vectoriel de tous les moments de chacune des aubes P.

L'unité de calcul 4 procède ensuite à une sélection, dans la liste de candidats, d'une répartition qui optimise le plus la fonction de coût (c'est-à-dire la répartition qui offre le meilleur équilibrage parmi les répartitions voisines). En fonction du type de fonction considéré, la répartition sélectionnée sera la répartition présentant un coût minimal ou maximal.

La répartition voisine sélectionnée est alors considérée comme nouvelle répartition de référence.

Les répartitions voisines générées sont en outre mémorisées dans la liste « tabou », par la mémoire tampon 6.

Ces étapes sont ensuite répétées dans une itération suivante, sur la base de cette nouvelle répartition de référence, et ainsi de suite dans des itérations ultérieures, chaque nouvelle itération considérant une nouvelle répartition de référence.

L'algorithme se termine lorsqu'un critère de sortie prédéterminé est vérifié, par exemple, une valeur de la fonction de coût est atteinte par une répartition de référence et/ou un nombre d'itérations est atteint.

Dans les deux cas, la répartition optimale choisie est la dernière répartition de référence considérée par l'algorithme de type Tabou mis en oeuvre.

Une particularité de l'algorithme de type Tabou utilisé est que, au cours de toute itération exceptée la première, il est fait en sorte que les répartitions de roue aubagée ayant participées à au moins une élection au cours d'une itération précédente ne sont pas traitées comme des répartitions voisines au cours d'une itération courante.

Ce principe d'exclusion peut être mis en oeuvre dans une itération courante par comparaison, après l'étape de génération des répartitions voisines, entre le contenu de la liste « tabou » (mise à jour au cours de l'itération immédiatement précédente) et le contenu de la liste de candidats. Toute répartition trouvée dans les deux listes est alors effacée de la liste de candidats.

L'exclusion peut être limitée aux seuls voisinages générés au cours de l'itération immédiatement précédente, afin de limiter la mémoire consommée par la liste tabou.

En variante, l'exclusion peut porter sur les répartitions voisines traitées au cours des K dernières itérations précédente l'itération courante. Cette variante permet d'explorer plus rapidement l'espace des répartitions de roue aubagée possibles.

Cette opération d'exclusion peut en outre conduire à augmenter la valeur de la fonction (dans un problème de minimisation) : c'est le cas lorsque toutes les répartitions voisines ont un coût plus élevé que la répartition de référence, qui forme alors un minimum local.

Le risque cependant est qu'à l'étape suivante, on retombe dans le minimum local auquel on vient d'échapper. C'est pourquoi il faut que l'heuristique ait de la mémoire : le mécanisme consiste à interdire (d'où le nom de tabou) de revenir sur les dernières positions explorées.

La taille de la liste Tabou peut être un paramètre d'exécution de l'algorithme, susceptible d'être changé par un opérateur via l'interface homme/machine 8.

*Génération de répartitions voisines*

Dans un mode de réalisation, quatre critères de ressemblances sont utilisés pour déterminer/générer les répartitions voisines.

Une répartition voisine définie d'après un premier critère de ressemblance est une répartition de roue aubagée obtenue après échange des positions associées à deux configurations d'aube dans la répartition de référence.

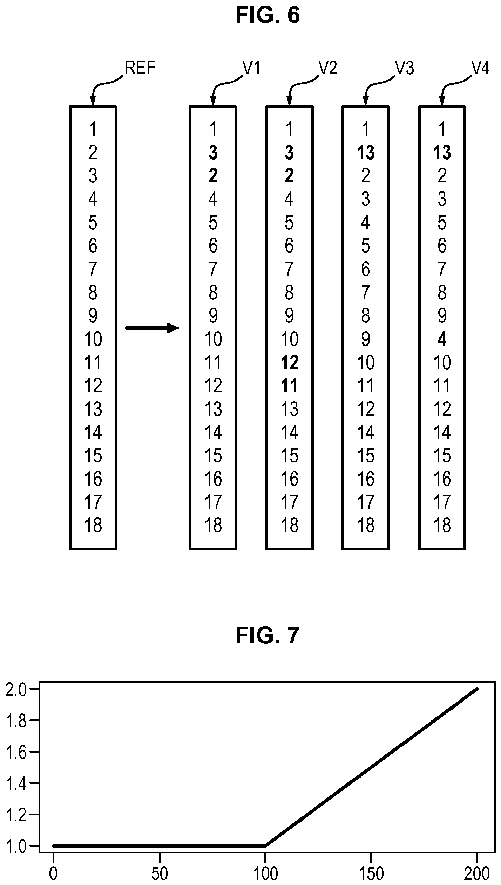

Est représenté en **figure 6** un exemple de répartition de référence REF et une répartition voisine V1 générée selon ce premier critère de ressemblance. Les positions 2 et 3 de la répartition REF sont échangées pour obtenir la répartition V1.

Une répartition voisine définie d'après un deuxième critère de ressemblance est une répartition de roue aubagée obtenue après deux échanges des positions associées à deux configurations d'aube dans la répartition de référence. Deux paires de positions sont échangées, par exemple distinctes.

Par ailleurs, une des positions échangées dans le cadre d'un des deux échanges, et une des positions échangées dans le cadre de l'autre des deux échanges peuvent être diamétralement opposées. A titre d'exemple, les positions 2 et 3 de la répartition REF sont échangées, de même les positions 12 et 11, pour obtenir la répartition V2, pour un nombre d'aubes égal à 18.

Le nombre d'échanges maximal autorisé pour respecter le deuxième critère peut être augmenté à une valeur supérieure à 2.

Les positions définissant un échange peuvent être adjacentes (dans l'application du premier critère ou du deuxième critère).

Une répartition voisine définie d'après un troisième critère de ressemblance est une répartition de roue aubagée résultant d'une permutation circulaire de configurations d'aube appliquée à un sous-ensemble de configurations d'aubes associées à des positions consécutives autour du disque dans la répartition de référence.

Une telle permutation représente virtuellement le déplacement d'une aube d'une roue aubagée définie d'après la répartition de référence depuis une première position vers une deuxième position, et un décalage des aubes intercalées entre la première position et la deuxième position.

A titre d'exemple, la répartition V3 illustrée en figure 6 est obtenue par une permutation circulaire appliquée à l'ensemble [2, ... 13] de la configuration de référence REF. Cette permutation circulaire représente le déplacement d'une aube virtuellement positionnée à la position 13, à la position 2.

Une répartition voisine définie d'après un quatrième critère de ressemblance est une répartition de roue aubagée résultant de deux permutations circulaires conformes au troisième critère.

Chacune des deux permutations circulaires appliquées étant représentative d'un déplacement de configuration d'aube depuis une position initiale vers une position de destination, il peut être prévu que les deux positions initiales soient diamétralement opposées dans la répartition de référence, et les deux positions finales diamétralement opposées dans la répartition voisine obtenue.

A titre d'exemple, la répartition V4 illustrée en figure 6 est obtenue d'après le quatrième critère.

Le nombre de permutations circulaires maximal autorisé pour respecter le quatrième critère peut être augmenté à une valeur supérieure à 2.

Au cours de l'étape de génération des voisins, plusieurs des quatre critères décrits ci-dessus sont utilisés pour générer au moins une répartition voisine de la répartition de référence. En d'autres termes, si les quatre critères sont utilisés alors au minimum quatre répartitions voisines sont générées au cours d'une même itération.

Les quatre critères de ressemblance différents exposés ci-dessus définissent des voisinages différents de la répartition de référence.

Le fait d'utiliser différents critères de ressemblance (et donc de définir différents voisinages pour une répartition de référence) est avantageux dans le cas où la fonction de coût dépend de plusieurs types de paramètre d'équilibrage.

En effet, l'utilisation d'un seul voisinage, défini à l'aide d'un unique critère de ressemblance pourrait aboutir à la sélection d'une répartition relativement équilibrée du point de vue d'un premier type de paramètre d'équilibrage, mais relativement déséquilibré d'un point de vue d'un autre type de paramètre d'équilibrage.

En conséquence, le fait d'utiliser ces différents critères permet d'explorer l'espace des répartitions possibles selon différentes stratégies possibles.

L'algorithme peut être mis en oeuvre avec des contraintes prédéterminées que la répartition d'aubes à choisir doit respecter.

Le caractère fixe ou bloqué de telle ou telle aube, déjà abordé précédemment, constitue un exemple de contrainte.

Par ailleurs, il peut être choisi qu'au moins un des paramètres de contrainte suivants doive être inférieur à un seuil prédéterminé dans la répartition :

- Balourd « Radial » résiduel : résultante des moments radiaux sur la roue ;
- Balourd « Radial+Tangentiel » résiduel : résultante des moments radiaux et tangentiels sur la roue ;
- Balourd « Radial généré par le couple Axial dans le plan du palier 1 » résiduel : résultante des composantes radiales générées par le couple axial dans le plan du palier 1 sur la roue ;
- Balourd « Radial+Tangentiel+Radial généré par le couple Axial dans un plan du palier 1 » résiduel : résultante des moments radiaux, tangentiels et radiaux liés au couple axial sur l'ensemble de la roue ;
- Delta moment Radial max aubes face à face : le maximum des écarts de moment entre 2 aubes face à face relevé sur la roue ;
- Delta moment Axial max aubes face à face : le maximum des écarts de moment entre 2 aubes face à face relevé sur la roue ;
- Delta moment Tangentiel max aubes face à face : le maximum des écarts de moment entre 2 aubes face à face relevé sur la roue ;
- Balourd « Calage » résiduel : en assimilant les calages des aubes de la roue à des vecteurs radiaux, on calcule la résultante radiale des calages sur la roue (calage mesuré à une certaine hauteur de coupe) ;
- Delta Calage max aube à aube : le maximum des écarts en calage relevé entre 2 aubes successives sur l'ensemble de la roue (calage mesuré à une certaine hauteur de coupe).

En définitive, quatre familles de contraintes peuvent être examinées :

- Les balourds : sur chaque position de la roue, une caractéristique d'aube (angle, moment, masse, ...) est représentée par un vecteur. Le balourd est la longueur du déplacement engendré par l'addition de l'ensemble des vecteurs associés à une ou plusieurs caractéristiques d'aube.
- Les deltas de caractéristique d'aubes face à face : sur certaines configurations de roue, en face de chaque aube se trouve une aube. Dans ce document, une paire d'aubes, désignera 2 aubes qui sont montées l'une en face de l'autre. Se donner une contrainte sur les paires consiste à regarder la différence des caractéristiques des aubes appariées.
- Les deltas de caractéristique d'aubes adjacentes : la différence maximale de caractéristiques d'une aube avec ses plus proches voisines est une quantité d'intérêt.
- Les positions bloquées : l'algorithme d'optimisation ne testera pas de roue avec des aubes bloquées qui ne seraient pas à leur place.

Par exemple, « déplacer » une aube, au sens du troisième critère, conduit à déplacer beaucoup d'aubes de leur position initiale dans la configuration de référence, cassant l'appairage initial des aubes dans la configuration de référence. Ceci a pour conséquence d'être incompatible avec la contrainte d'avoir des aubes fixes (c'est-à-dire des aubes indéplaçables) ou, dans une moindre mesure, des contraintes sur des paires d'aubes diamétralement opposées sur la roue. Si un certain nombre d'aubes perdent leur position initiale (généralement déplacée d'une case), leur position vis-à-vis de leur voisine est peu modifiée, du coup ce voisinage privilégie une amélioration sur les critères de type « delta adjacent ».

Le tableau ci-dessous synthétise les avantages et inconvénients des différents voisinages en fonction du critère d'équilibrage recherché.

| Voisinage | Aubes fixes | Delta critère adjacent | Delta critère paire | Balourd |
|---|---|---|---|---|
| déplacement 1 aube | - - | + | - | + |
| permutation 2 aubes | + + | - | - | + |

(suite)

| Voisinage | Aubes fixes | Delta critère adjacent | Delta critère paire | Balourd |
|---|---|---|---|---|
| déplacement 1 paire | - - | + | + | + |
| permutation 2 paires | + + | - | + | + |

*Sélection d'une répartition voisine « optimale »*

Le balourd d'une configuration voisine donnée est calculé à partir des n valeurs de mesure de paramètre d'équilibrage de même type (par exemple n angles de calage) contenues dans chacune des n configurations d'aube, et à partir des n positions associées aux n configurations d'aube de la répartition voisine.

Par exemple, le balourd d'une configuration voisine se rapportant aux angles de calage peut être calculé comme la somme de n vecteurs élémentaires ; chaque vecteur élémentaire d'indice i allant de 1 à n est défini à l'aide de la mesure d'angle de calage et est consignée dans la configuration d'aube d'indice i, et la position d'indice j. L'orientation du vecteur somme calculé, par rapport à l'axe virtuel du disque D est représentative d'un degré d'équilibre de la configuration voisine, du point de vue des angles de calage. Un vecteur somme colinéaire à cet axe est représentatif d'une roue parfaitement équilibrée.

Des balourds se rapportant à un moment (tangentiel, axial, ou radial) peuvent être calculés de la même manière.

Lorsque les configurations d'aube contiennent plus d'un type de paramètre d'équilibrage, plusieurs balourds peuvent être calculés pour chacune des répartitions voisines, chaque balourd se rapportant à un type de paramètre d'équilibrage. Par exemple, pour chacune des répartitions voisines, un balourd relatif aux angles de calages, un balourd relatif aux moments axiaux, un balourd relatif aux moments tangentiels, etc., peuvent être calculés.

D'autres balourds plus complexes, représentatifs d'une combinaison de mesures de paramètre d'équilibrage, peuvent également être calculés.

*Fonction de coût*

La fonction de coût dépend des valeurs prédéterminées suivantes:

- C_ba : une référence de balourd axial
- C_br : une référence de balourd radial
- C_bt : une référence de balourd tangentiel
- C_brt : une référence de balourd Radial+Tangentiel
- C_brta : une référence de balourd Radial+Tangentiel+Axial
- C_bang : une référence de balourd angulaire
- C_adjacent_ang : une référence d'écart d'angles adjacents
- C_paire_a : une référence de critère paire moments axial
- C_paire_t : une référence de critère paire moments tangentiel
- C_paire_r : une référence de critère paire moments radial
- C_paire_ang : une référence de critère paire angle de calage

Ces valeurs sont déterminées par un expert selon les seuils de vibration et d'acoustique qu'il souhaite atteindre.

La fonction de coût dépend en outre des paramètres suivants :

- BA(Roue) : balourd axial calculé pour la répartition de roue aubagée Roue
- BR(Roue) : balourd radial calculé pour la répartition de roue aubagée Roue
- BT(Roue) : balourd tangentiel calculé pour la répartition de roue aubagée Roue
- BRT(Roue) : balourd radial+tangentiel calculé pour la répartition de roue aubagée Roue
- BRTA(Roue) : balourd radial+tangentiel+axial calculé pour la répartition de roue aubagée Roue
- BAng(Roue) : balourd angulaire calculé pour la répartition de roue aubagée Roue
- Dadja_Ang(Roue) : écart maximum d'angles de calage adjacents trouvé dans la répartition Roue.

La fonction de coût est construite à l'aide des termes suivants, appelés « éloignements » :

- E_ba(Roue) = max(1, BA(Roue)/C_ba)
- E_br(Roue) = max(1, BR(Roue)/C_br)

- E_bt(Roue) = max(1, BT(Roue)/C_bt)
- E_brt(Roue) = max(1, BRT(Roue)/C_brt)
- E_brta(Roue) = max(1, BRTA(Roue)/C_brta)
- E_bang(Roue) = max(1, Bang(Roue)/C_bang)
- E_delta_ang(Roue) = max(1, Dadja_Ang(Roue)/C_adjacent_ang)

Ces éloignements ont la forme illustrée en figure 7. On comprend que chaque référence de l'axe d'abscisse définit un critère d'équilibrage. Quel que soit l'éloignement considéré, lorsque la roue respecte le critère associé, l'éloignement stagne à 1. L'intérêt de cette borne inférieure, ou seuillage, réside dans l'idée que tant qu'un critère est atteint l'algorithme se concentre sur les autres critères.

La fonction de coût dépend également d'un autre paramètre Nb_paire(Roue), appelé « nombre de delta paire moment tangentiel hors critère en radial ou en tangentiel », et est défini comme suit :

$$
Nb\_paire(Roue)
$$

$$
= \frac{n}{2}
$$

$$
- \sum_{i=1}^{n/2} \left( 1_{\left\{\left|M\_R_i - M\_R_{i+\frac{n}{2}}\right| < C\_paire\_r\right\}} \times 1_{\left\{\left|M\_T_i - M\_T_{i+\frac{n}{2}}\right| < C\_paire\_t\right\}} \right.
$$

$$
\left. \times 1_{\left\{\left|M\_A_i - M\_A_{i+\frac{n}{2}}\right| < C\_paire\_a\right\}} \times 1_{\left\{\left|Ang_i - Ang_{i+\frac{n}{2}}\right| < C\_paire\_ang\right\}} \right)
$$

où :

- 1{} est la fonction indicatrice,
- M_Ri le moment radial de l'aube d'indice i
- M_Ti le moment tangentiel de l'aube d'indice i
- M_Ai le moment axial de l'aube d'indice i
- Angi l'angle de calage de l'aube d'indice i
- n est le nombre d'aubes.

La fonction de coût est également construite à l'aide d'un éloignement vis-à-vis des critères d'appairage (C_paire_xxx, où xxx représente la grandeur d'intérêt), de la forme :

$$
E\_paire = 2^{Nb\_paire(Roue)}
$$

La fonction de coût sur la roue est définie comme suit :

$$
Eloignement(Roue)
$$
$$
= E\_ba(Roue) \times E\_br(Roue) \times E\_bt(Roue) \times E\_brt(Roue)
$$
$$
\times E\_brta(Roue) \times E\_bang(Roue) \times E\_delta\_ang(Roue)
$$
$$
\times E\_paire(Roue)
$$

Ou bien, en variante comme suit :

$$Eloignement(Roue)$$

$$= max(E\_ba(Roue)\,;\,E\_br(Roue);\,E\_bt(Roue);\,E\_brt(Roue);\,E\_brta(Roue)$$

$$\times\,E\_bang(Roue))\,\times\,E\_delta\_ang(Roue)\,\times\,E\_paire(Roue)$$

Un indicateur par famille de critères à respecter, permet de ne pas « noyer » une famille peu représentée. Dans un mode de réalisation particulier, seules les références utilisant le moment radial sont utilisées. Dans un autre mode de réalisation, seules les références utilisant les moments sont utilisées. Plus généralement, selon les valeurs utilisées pour les références C_b* et C_p*, l'accent peut être mis sur un ou plusieurs critères en particulier. Le procédé de répartition peut être codé en un produit programme d'ordinateur comprenant des instructions de code de programme pour l'exécution de ses étapes, lorsque ce programme est exécuté par l'unité de calcul 4.

En synthèse, il s'agit d'utiliser un algorithme de recherche d'une solution de type « marche aléatoire » dans l'espace des possibles (ici, l'algorithme Tabou, mais l'utilisation d'un gradient stochastique ou d'un algorithme génétique reste possible). Ainsi, il a fallu imaginer plusieurs déplacements élémentaires compatibles avec les différents objectifs à atteindre à tout moment de la recherche. Il a fallu aussi imaginer une fonction de coût (distance aux objectifs) favorisant l'atteinte de tous les objectifs, en introduisant un seuillage lorsque les objectifs sont atteints.

**Revendications**

1.  Procédé de fabrication d'une roue aubagée pour turbomachine à partir d'aubes (P) et d'un disque (D), le procédé comprenant les étapes de

    • simulation de répartition d'aubes (P) sur un disque (D) de turbomachine, et
    • assemblage des aubes (P) sur le disque (D) d'après une répartition de roue aubagée sélectionnée par le procédé de simulation,
    dans lequel la simulation comprend les étapes suivantes mises en oeuvre par ordinateur :

    • fourniture d'une pluralité de configurations d'aube, chaque configuration d'aube étant associée à une aube et comprenant une pluralité de mesures de paramètre d'équilibrage (R, T, A) mesurées sur l'aube (P) associée,
    • recherche et sélection (106) d'une répartition de roue aubagée associant les configurations d'aubes fournies avec des positions sur le disque, la répartition de roue aubagée optimisant une fonction de coût prédéterminée dépendant des mesures de paramètres d'équilibrage, la recherche et la sélection étant conduites par itérations successives, une itération courante de la recherche et de la sélection (106) comprenant les étapes de:

    o génération d'une pluralité de répartitions voisines (V1, V2, V3, V4) à partir d'une répartition de référence (REF), ladite pluralité comprenant au moins une première répartition voisine générée à partir de la répartition de référence d'après un premier critère de ressemblance prédéterminé et au moins une deuxième répartition générée à partir de la répartition de référence d'après un deuxième critère de ressemblance prédéterminé,
    o sélection, parmi les répartitions voisines, d'une répartition voisine optimisant la fonction de coût comme nouvelle répartition de référence.

    dans lequel la fonction de coût dépend de plusieurs balourds, chaque balourd se rapportant à un type de mesure de paramètre d'équilibrage respectif, **caractérisé en ce que** au moins un des balourds fait l'objet d'un seuillage par application de la fonction de coût, et **en ce que** la fonction de coût est définie comme suit :

$$Eloignement(Roue)$$
$$= max(1, BA(Roue)/C\_ba) \times max(1, BR(Roue)/C\_br)$$
$$\times max(1, BT(Roue)/C\_bt) \times max(1, BRT(Roue)/C\_brt)$$
$$\times max(1, BRTA(Roue)/C\_brta) \times max(1, Bang(Roue)$$
$$/C\_bang) \times max(1, Dadja\_Ang\,(Roue)/C\_adjacent\_ang)$$
$$\times 2^{Nb\_paire(Roue)}$$

ou bien comme suit :

$$Eloignement(Roue)$$
$$= max(max(1, BA(Roue)/C\_ba)\ ;\ max(1, BR(Roue)$$
$$/C\_br)\ ;\ max(1, BT(Roue)/C\_bt)\ ;\ max(1, BRT(Roue)$$
$$/C\_brt)\ ;\ max(1, BRTA(Roue)/C\_brta) \times max(1, Bang(Roue)$$
$$/C\_bang))\times max(1, Dadja\_Ang\,(Roue)/C\_adjacent\_ang)$$
$$\times 2^{Nb\_paire(Roue)}$$

où :

- $BA(Roue)$ est un balourd axial calculé pour une répartition de roue aubagée Roue
- $BR(Roue)$ est un balourd radial calculé pour la répartition de roue aubagée Roue
- $BT(Roue)$ est un balourd tangentiel calculé pour la répartition de roue aubagée Roue
- $BRT(Roue)$ est un balourd radial et tangentiel calculé pour la répartition de roue aubagée Roue
- $BRTA(Roue)$ est un balourd radial, tangentiel et axial calculé pour la répartition de roue aubagée Roue
- $BAng(Roue)$ est un balourd angulaire calculé pour la répartition de roue aubagée Roue
- $Dadja\_Ang(Roue)$ est un écart maximum d'angles de calage adjacents trouvé dans la répartition Roue
- C_ba, C_br, C_bt, C_brt, C_brta, C_bang, C_adjacent_ang, C_paire_a, C_paire_t, C_paire_r, C_paire_ang sont des valeurs de référence prédéterminées,

où :

$$Nb\_paire(Roue)$$
$$= \frac{n}{2}$$
$$- \sum_{i=1}^{n/2}\left(1_{\left\{\left|M\_R_i - M\_R_{i+\frac{n}{2}}\right|<C\_paire\_r\right\}} \times 1_{\left\{\left|M\_T_i - M\_T_{i+\frac{n}{2}}\right|<C\_paire\_t\right\}}\right.$$
$$\left.\times 1_{\left\{\left|M\_A_i - M\_A_{i+\frac{n}{2}}\right|<C\_paire\_a\right\}} \times 1_{\left\{\left|Ang_i - Ang_{i+\frac{n}{2}}\right|<C\_paire\_ang\right\}}\right)$$

et où :

- $1\{\}$ est la fonction indicatrice,
- $M\_R_i$ est un moment radial d'une aube d'indice i,
- $M\_T_i$ est un moment tangentiel de l'aube d'indice i,

• $M\_A_i$ est un moment axial de l'aube d'indice i,

• $Ang_i$ est un angle de calage de l'aube d'indice i ,

• $n$ est le nombre d'aubes.

**2.** Procédé selon la revendication 1, dans lequel la recherche et la sélection sont conduites au moyen d'un algorithme de type Tabou, et dans lequel au moins une répartition de roue aubagée ayant participée à au moins une sélection au cours d'une itération précédente n'est pas traitée comme une répartition voisine au cours de l'itération courante.

**3.** Procédé selon l'une des revendications précédentes, dans lequel au moins une répartition voisine (V1, V2) résulte d'un ou deux échanges de positions d'aube entre configurations d'aubes de la répartition de référence (REF).

**4.** Procédé selon la revendication 3, dans lequel deux échanges de positions d'aube sont mis en oeuvre, une des positions échangées dans le cadre d'un des deux échanges et une des positions échangées dans le cadre de l'autre des deux échanges sont diamétralement opposées.

**5.** Procédé selon l'une des revendications précédentes, dans lequel au moins une répartition voisine (V3, V4) résulte d'une ou de deux permutations circulaires de configuration d'aube appliquées à la répartition de référence, chaque permutation circulaire étant opérée sur un sous-ensemble de configurations d'aube associées à des positions consécutives autour du disque dans la répartition de référence.

**6.** Procédé selon la revendication 5, dans lequel deux permutations circulaires sont mis en oeuvre, chacune des deux permutations circulaires appliquées est représentative d'un déplacement de configuration d'aube depuis une position initiale vers une position de destination, les deux positions initiales étant diamétralement opposées dans la répartition de référence, et les deux positions finales étant diamétralement opposées dans la répartition voisine obtenue.

**7.** Procédé selon l'une des revendications précédentes, dans lequel est sélectivement généré au cours de l'itération courante un nombre de répartitions voisines inférieur au nombre total de premières voisines de la répartition de référence.

**8.** Procédé selon l'une des revendications précédentes, comprenant, pour la répartition de référence et pour chaque répartition voisine, le calcul d'au moins un balourd à partir de mesures de paramètre d'équilibrage d'un même type contenues dans les configurations d'aube de la répartition, et à partir des positions associées aux configurations d'aube dans la répartition, la fonction de coût dépendant du balourd.

**9.** Procédé selon l'une des revendications précédentes, dans lequel les mesures de paramètre d'équilibrage sont d'au moins un des types suivants: angle de calage d'aube, moment axial d'aube, moment radial d'aube, et moment tangentiel d'aube.

## Patentansprüche

**1.** Verfahren zur Herstellung eines Schaufelrads für eine Turbomaschine aus Schaufeln (P) und aus einer Scheibe (D), wobei das Verfahren die folgenden Schritte umfasst:

• Simulieren der Verteilung der Schaufeln (P) auf einer Scheibe (D) der Turbomaschine, und
• Verbinden der Schaufeln (P) auf der Scheibe (D) gemäß einer von dem Simulationsverfahren ausgewählten Schaufelradverteilung,
wobei die Simulation die folgenden Schritte umfasst, die von einem Rechner durchgeführt werden:

• Bereitstellen einer Vielzahl von Schaufelkonfigurationen, wobei jede Schaufelkonfiguration einer Schaufel zugeordnet ist und eine an der zugeordneten Schaufel (P) gemessene Vielzahl von Messungen eines Auswuchtparameters (R, T, A) umfasst,
• Ermitteln und Auswählen (106) einer Schaufelradverteilung, die die bereitgestellten Schaufelkonfigurationen Positionen auf der Scheibe zuordnet, wobei die Schaufelradverteilung eine vorbestimmte Kostenfunktion optimiert, die von den Auswuchtparametermessungen abhängt, wobei die Ermittlung und die Auswahl in aufeinanderfolgenden Iterationen durchgeführt wird, wobei eine aktuelle Iteration der Ermittlung und der Auswahl (106) die folgenden Schritte umfasst:

◦ Erzeugen einer Vielzahl von Nachbarverteilungen (V1, V2, V3, V4) gemäß einer Referenzverteilung (REF), wobei die Vielzahl mindestens eine erste Nachbarverteilung umfasst, die gemäß der Referenzverteilung gemäß einem ersten vorbestimmten Ähnlichkeitskriterium erzeugt wird, und mindestens eine zweite Verteilung, die gemäß der Referenzverteilung gemäß einem zweiten vorbestimmten Ähnlichkeitskriterium erzeugt wird,

◦ Auswählen, aus den Nachbarverteilungen, einer Nachbarverteilung, die die Kostenfunktion als neue Referenzverteilung optimiert,

wobei die Kostenfunktion von mehreren Unwuchten abhängt, wobei sich jede Unwucht auf einen Messtyp des jeweiligen Ausgleichsparameters bezieht, **dadurch gekennzeichnet, dass** mindestens eine der Unwuchten durch Anwendung der Kostenfunktion einer Schwellenwertbildung unterzogen wird, und
dass die Kostenfunktion wie folgt definiert ist:

$$Eloignement(Roue)$$
$$= max(1, BA(Roue)/C\_ba) \times max(1, BR(Roue)/C\_br)$$
$$\times max(1, BT(Roue)/C\_bt) \times max(1, BRT(Roue)/C\_brt)$$
$$\times max(1, BRTA(Roue)/C\_brta) \times max(1, Bang(Roue)$$
$$/C\_bang) \times max(1, Dadja\_Ang\,(Roue)/C\_adjacent\_ang)$$
$$\times 2^{Nb\_paire(Roue)}$$

beziehungsweise folgendermaßen:

$$Eloignement(Roue)$$
$$= max(max(1, BA(Roue)/C\_ba)\;;\; max(1, BR(Roue)$$
$$/C\_br)\;;\; max(1, BT(Roue)/C\_bt)\;;\; max(1, BRT(Roue)$$
$$/C\_brt)\;;\; max(1, BRTA(Roue)/C\_brta) \times max(1, Bang(Roue)$$
$$/C\_bang)) \times max(1, Dadja\_Ang\,(Roue)/C\_adjacent\_ang)$$
$$\times 2^{Nb\_paire(Roue)}$$

wobei:

- *BA(Roue)* eine axiale Unwucht ist, berechnet für eine Schaufelradverteilung Roue
- *BR(Roue)* eine radiale Unwucht ist, berechnet für eine Schaufelradverteilung Roue
- *BT(Roue)* eine tangentiale Unwucht ist, berechnet für eine Schaufelradverteilung Roue
- *BRT(Roue)* eine radiale und tangentiale Unwucht ist, berechnet für eine Schaufelradverteilung Roue
- *BRTA(Roue)* eine radiale, tangentiale und axiale Unwucht ist, berechnet für eine Schaufelradverteilung Roue
- *BAng(Roue)* eine Winkelunwucht ist, berechnet für eine Schaufelradverteilung Roue
- *Dadja_Ang(Roue)* eine maximale Abweichung benachbarter Stellwinkel in der Verteilung Roue ist
- C_ba, C_br, C_bt, C_brt, C_brta, C_bang, C_adjacent_ang, C_paire_a, C_paire_t, C_paire_r, C_paire_ang vorbestimmte Referenzwerte sind, wobei

$$Nb\_paire(Roue)$$

$$= \frac{n}{2}$$

$$- \sum_{i=1}^{n/2} \left( 1_{\left\{ \left| M\_R_i - M\_R_{i+\frac{n}{2}} \right| < C\_paire\_r \right\}} \times 1_{\left\{ \left| M\_T_i - M\_T_{i+\frac{n}{2}} \right| < C\_paire\_t \right\}} \right.$$

$$\left. \times 1_{\left\{ \left| M\_A_i - M\_A_{i+\frac{n}{2}} \right| < C\_paire\_a \right\}} \times 1_{\left\{ \left| Ang_i - Ang_{i+\frac{n}{2}} \right| < C\_paire\_ang \right\}} \right)$$

und wobei:

- $1\{\}$ die Indikatorfunktion ist,
- $M\_R_i$ ein radiales Moment einer Schaufel mit dem Index i ist,
- $M\_T_i$ ein tangentiales Moment der Schaufel mit dem Index i ist,
- $M\_A_i$ ein axiales Moment der Schaufel mit dem Index i ist,
- $Ang_i$ ein Stellwinkel der Schaufel mit dem Index i ist,
- $n$ die Anzahl der Schaufeln ist.

2. Verfahren nach Anspruch 1, wobei die Suche und die Auswahl mittels eines Tabou-Algorithmus durchgeführt werden, und wobei mindestens eine Schaufelradverteilung, die an mindestens einer Auswahl in einer vorherigen Iteration teilgenommen hat, in der aktuellen Iteration nicht als Nachbarverteilung behandelt wird.

3. Verfahren nach einem der vorhergehenden Ansprüche, wobei mindestens eine Nachbarverteilung (V1, V2) aus einem oder zwei Austauschen von Schaufelpositionen zwischen Schaufelkonfigurationen der Referenzverteilung (REF) resultiert.

4. Verfahren nach Anspruch 3, wobei zwei Austausche von Schaufelpositionen durchgeführt werden, wobei eine der Positionen, die im Rahmen einer der beiden Austausche ausgetauscht werden, und eine der Positionen, die im Rahmen des anderen der beiden Austausche ausgetauscht werden, diametral entgegengesetzt sind.

5. Verfahren nach einem der vorhergehenden Ansprüche, wobei mindestens eine Nachbarverteilung (V3, V4) aus einer oder zwei kreisförmigen Permutationen von Schaufelkonfigurationen resultiert, die auf die Referenzverteilung angewendet werden, wobei jede kreisförmige Permutation an einer Teilmenge von Schaufelkonfigurationen vorgenommen wird, die aufeinanderfolgenden Positionen um die Scheibe in der Referenzverteilung zugeordnet sind.

6. Verfahren nach Anspruch 5, wobei zwei kreisförmige Permutationen durchgeführt werden, wobei jede der beiden angewendeten kreisförmigen Permutationen für eine Schaufelkonfigurationsverlagerung von einer Anfangsposition zu einer Zielposition repräsentativ ist, wobei die beiden Anfangspositionen in der Referenzverteilung diametral entgegengesetzt sind und die beiden Endpositionen in der erhaltenen Nachbarverteilung diametral entgegengesetzt sind.

7. Verfahren nach einem der vorhergehenden Ansprüche, wobei in der aktuellen Iteration selektiv eine Anzahl von Nachbarverteilungen erzeugt wird, die kleiner ist als die Gesamtzahl erster Nachbarn der Referenzverteilung.

8. Verfahren nach einem der vorhergehenden Ansprüche, das für die Referenzverteilung und für jede Nachbarverteilung die Berechnung mindestens einer Unwucht aus Messungen von Ausgleichsparametern desselben Typs, die in den Schaufelkonfigurationen der Verteilung enthalten sind, und aus den Positionen, die den Schaufelkonfigurationen in der Verteilung zugeordnet sind, umfasst, wobei die Kostenfunktion von der Unwucht abhängt.

9. Verfahren nach einem der vorhergehenden Ansprüche, wobei die Auswuchtparametermessungen von mindestens einem der folgenden Typen sind: Schaufelstellwinkel, Schaufelaxialmoment, Schaufelradialmoment und Schaufeltangentialmoment.

**Claims**

1.  A method of manufacturing an impeller for a turbomachine from blades (P) and from a disk (D), the method comprising the following steps:

    - simulating a distribution of the blades (P) on a disk (D) of the turbomachine, and

    • Connecting the blades (P) on the disk (D) according to a blade wheel distribution selected by the simulation,

    where the simulation comprises the following steps, which are performed by a computer:

    • Providing a plurality of blade configurations, each blade configuration being associated with a blade and comprising a plurality of measurements of a balancing parameter (R, T, A) measured on the associated blade (P),
    • Determining and selecting (106) a blade wheel distribution that assigns the provided blade configurations to positions on the disk, wherein the blade wheel distribution optimizes a predetermined cost function that depends on the balancing parameter measurements, wherein the determining and selecting is performed in successive iterations, wherein a current iteration of the determining and selecting (106) comprises the following steps:

    ◦ generating a plurality of neighbor distributions (V1, V2, V3, V4) according to a reference distribution (REF), the plurality comprising at least one first neighbor distribution generated according to the reference distribution according to a first predetermined similarity criterion, and at least one second distribution generated according to the reference distribution according to a second predetermined similarity criterion,
    ◦ Select, from the neighbouring distributions, a neighbouring distribution that optimizes the cost function as a new reference distribution,

    the cost function being dependent on a plurality of unbalances, each unbalance relating to a measurement type of the respective compensation parameter, **characterized in that** at least one of the unbalances is subjected to thresholding by application of the cost function, and
    that the cost function is defined as follows:

    $$\begin{aligned} Eloignement(Roue) \\ = max(1, BA(Roue)/C\_ba) \times max(1, BR(Roue)/C\_br) \\ \times max(1, BT(Roue)/C\_bt) \times max(1, BRT(Roue)/C\_brt) \\ \times max(1, BRTA(Roue)/C\_brta) \times max(1, Bang(Roue) \\ /C\_bang) \times max(1, Dadja\_Ang\ (Roue)/C\_adjacent\_ang) \\ \times 2^{Nb\_paire(Roue)} \end{aligned}$$

    respectively as follows:

    $$\begin{aligned} Eloignement(Roue) \\ = max(max(1, BA(Roue)/C\_ba)\ ;\ max(1, BR(Roue) \\ /C\_br)\ ;\ max(1, BT(Roue)/C\_bt)\ ;\ max(1, BRT(Roue) \\ /C\_brt)\ ;\ max(1, BRTA(Roue)/C\_brta) \times max(1, Bang(Roue) \\ /C\_bang))\times max(1, Dadja\_Ang\ (Roue)/C\_adjacent\_ang) \\ \times 2^{Nb\_paire(Roue)} \end{aligned}$$

    where:

*- BA(Roue)* is an axial unbalance, calculated for a blade wheel distribution Roue
*- BR(Roue)* is a radial unbalance, calculated for a blade wheel distribution Roue
*- BT(Roue)* is a tangential unbalance, calculated for a blade wheel distribution Roue
*- BRT(Roue)* is a radial and tangential unbalance, calculated for a blade wheel distribution Roue
*- BRTA(Roue)* is a radial, tangential and axial unbalance, calculated for a blade wheel distribution Roue
*- BAng(Roue)* is an angular unbalance, calculated for a blade wheel distribution Roue
*- Dadja_Ang(Roue)* is a maximum deviation of neighboring setting angles in the Roue distribution
- C_ba, C_br, C_bt, C_brt, C_brta, C_bang, C_adjacent_ang, C_paire_a, C_paire_t, C_paire_r, C_paire_ang are predetermined reference values,
whereby

$$
Nb\_paire(Roue)
$$

$$
= \frac{n}{2}
$$

$$
- \sum_{i=1}^{n/2} \left( 1_{\left\{ \left| M\_R_i - M\_R_{i+\frac{n}{2}} \right| < C\_paire\_r \right\}} \times 1_{\left\{ \left| M\_T_i - M\_T_{i+\frac{n}{2}} \right| < C\_paire\_t \right\}} \right.
$$

$$
\left. \times 1_{\left\{ \left| M\_A_i - M\_A_{i+\frac{n}{2}} \right| < C\_paire\_a \right\}} \times 1_{\left\{ \left| Ang_i - Ang_{i+\frac{n}{2}} \right| < C\_paire\_ang \right\}} \right)
$$

and where:

- 1{} is the indicator function,
- $M\_R_i$ is a radial moment of a blade with the index i,
- $M\_T_i$ is a tangential moment of the blade with the index i,
- $M\_A_i$ is an axial moment of the blade with the index i,
- $Ang_i$ is an angle of the blade with the index i,
- *n* is the number of blades.

2. The method of claim 1, wherein the search and selection are performed using a Tabou algorithm, and wherein at least one paddle wheel distribution that participated in at least one selection in a previous iteration is not treated as a neighbor distribution in the current iteration.

3. The method according to any one of the preceding claims, wherein at least one neighboring distribution (V1, V2) results from one or two exchanges of blade positions between blade configurations of the reference distribution (REF).

4. The method of claim 3, wherein two exchanges of blade positions are performed, wherein one of the positions exchanged in one of the two exchanges and one of the positions exchanged in the other of the two exchanges are diametrically opposed.

5. The method according to any one of the preceding claims, wherein at least one neighboring distribution (V3, V4) results from one or two circular permutations of blade configurations applied to the reference distribution, each circular permutation being performed on a subset of blade configurations associated with successive positions around the disk in the reference distribution.

6. The method of claim 5, wherein two circular permutations are performed, each of the two circular permutations applied being representative of a blade configuration shift from an initial position to a target position, the two initial positions being diametrically opposed in the reference distribution and the two final positions being diametrically opposed in the obtained neighboring distribution.

7. The method according to any one of the preceding claims, wherein in the current iteration a number of neighbor distributions is selectively generated which is smaller than the total number of first neighbors of the reference distribution.

8. The method according to any one of the preceding claims, comprising, for the reference distribution and for each neighboring distribution, calculating at least one unbalance from measurements of balancing parameters of the same type contained in the blade configurations of the distribution and from the positions associated with the blade configurations in the distribution, wherein the cost function depends on the unbalance.

9. The method according to any one of the preceding claims, wherein the balancing parameter measurements are of at least one of the following types: Blade pitch angle, blade axial moment, blade radial moment and blade tangential moment.

# FIG. 1

# FIG. 2a

FIG. 2c

FIG. 2b

## FIG. 3

## FIG. 4

## FIG. 5

```
┌──────────────────────┐        ┌──────────────────────┐
│       Roue 1         │        │       Roue n         │
├──────────────────────┤  • • • ├──────────────────────┤
│   Position aube 1    │        │   Position aube n    │
│   Moment (RTA) 1     │        │   Moment (RTA) n     │
│      Angle 1         │        │      Angle n         │
└──────────────────────┘        └──────────────────────┘
```

106

```
┌──────────────────────────────┐
│        Sélection i           │
├──────────────────────────────┤
│        Roue 1...n            │
│   Nombre de candidats        │
│       Liste tabou            │
├──────────────────────────────┤
│  Test pour meilleur candidat │
└──────────────────────────────┘
```

```
        ╱╲
       ╱  ╲
      ╱    ╲
     ╱Tant que╲
    ╱ i = Nb simu╲
    ╲ ou E = 1  ╱
     ╲        ╱
      ╲      ╱
       ╲    ╱
        ╲  ╱
         ╲╱
```

```
┌──────────────────────────────┐
│        Recherche i           │
├──────────────────────────────┤
│        Sélection i           │
│         Objectifs            │
├──────────────────────────────┤
│   Mise à jour liste tabou    │
│  Solution de la recherche    │
└──────────────────────────────┘
```

## FIG. 6

| REF | V1 | V2 | V3 | V4 |
|-----|----|----|----|----|
| 1 | 1 | 1 | 1 | 1 |
| 2 | **3** | **3** | **13** | **13** |
| 3 | **2** | **2** | 2 | 2 |
| 4 | 4 | 4 | 3 | 3 |
| 5 | 5 | 5 | 4 | 5 |
| 6 | 6 | 6 | 5 | 6 |
| 7 | 7 | 7 | 6 | 7 |
| 8 | 8 | 8 | 7 | 8 |
| 9 | 9 | 9 | 8 | 9 |
| 10 | 10 | 10 | 9 | **4** |
| 11 | 11 | **12** | 10 | 10 |
| 12 | 12 | **11** | 11 | 11 |
| 13 | 13 | 13 | 12 | 12 |
| 14 | 14 | 14 | 14 | 14 |
| 15 | 15 | 15 | 15 | 15 |
| 16 | 16 | 16 | 16 | 16 |
| 17 | 17 | 17 | 17 | 17 |
| 18 | 18 | 18 | 18 | 18 |

## FIG. 7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3037168, Andrew Mason

**Littérature non-brevet citée dans la description**

- **ERIC TAILLARD.** *POPMUSIC - Partial Optimisation Metaheuristic under Spécial Intensification Conditions,* 01 Janvier 2002